# EUROPEAN PATENT SPECIFICATION

(11) **EP 4 080 089 B1**
(45) Date of publication and mention of the grant of the patent: **06.08.2025**
(21) Application number: 22169078.7
(22) Date of filing: 20.04.2022
(51) Int. Cl.: F16H 61/431

(54) **A METHOD AND AN APPARATUS FOR CONTROLLING THE DISPLACEMENT OF A VEHICULAR PUMP**
VERFAHREN UND VORRICHTUNG ZUR STEUERUNG DER VERDRÄNGUNG EINER FAHRZEUGPUMPE
PROCÉDÉ ET APPAREIL DE COMMANDE DE CYLINDRÉE D'UNE POMPE DE VÉHICULE

(30) Priority: 20.04.2021 IT 202100009980
(43) Date of publication of application: 26.10.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT)
(74) Representative: CNH Industrial IP Department

(56) References cited:
- CN-A- 108 506 251
- JP-A- 2005 023 870
- US-A- 3 422 767
- US-A1- 2007 193 263

## Description

### TECHNICAL FIELD

The invention concerns a method for controlling the displacement of a pump mounted on a vehicle and driven by an engine of the vehicle.

The invention also concerns the vehicle including an apparatus for controlling the displacement of the pump.

### BACKGROUND OF THE INVENTION

As known, some vehicles, in particular work vehicles such as wheel loaders are provided with an engine and a hydrostatic transmission.

The hydrostatic transmission includes a variable displacement pump, which is driven in use by the engine, and a hydraulic motor.

The hydraulic motor is connected to the wheels and is supplied with pressurized oil by the pump to drive the wheels.

The pump displacement is controllable through an input command for the pump. The input command is a function of the engine speed and is in particular based on a single predetermined mapping, which more in particular consists of a characteristic curve in two variables that are the engine speed and the input command.

The actual pump displacement is obtained as a result of an equilibrium between the pressure in the hydrostatic transmission (due to the load acting on the vehicle) and the input command, which is a function of the engine speed, in a way that the higher is the pressure the lower is the actual pump displacement and the higher is the engine speed the higher is the actual pump displacement.

Hence, when the pump displacement starts to increase from zero, the vehicle starts to move with different engine speeds based on the vehicle load conditions, in a way that the higher is the load on the vehicle the higher is the engine speed.

Considering that the vehicle may have both a forward and a rearward motion along the advancing direction thereof, the considered approach relying on a single predetermined curve is affected by drawbacks.

JP2005023870A discloses a pump controller of a working vehicle in which a travel force can be obtained by switching control characteristics between the forward travel and the reverse travel.

In particular, during the vehicle starting, the engine speed may result changed when the vehicle moves forward with respect to when the vehicle moves rearward and vice versa, because the vehicle load conditions may be different.

This may ingenerate an uncomfortable feeling to a driver of the vehicle and a decrease of performance and efficiency of the vehicle.

Therefore, the need is felt for an improvement, in particular by overcoming the discussed drawbacks.

An aim of the invention is to satisfy the abovementioned need, preferably in a simple and cost effective manner.

### SUMMARY OF THE INVENTION

The aforementioned aim is reached by a method and a vehicle as claimed in the independent claims.

Dependent claims disclose specific embodiments of the invention.

### BRIEF DESCRIPTION OF DRAWINGS

For a better understanding of the present invention, a preferred embodiment is described in the following, by way of a non-limiting example, with reference to the attached drawings wherein:
- Figure 1 is a scheme representing an exemplarily embodiment of a vehicle according to the invention,
- Figure 2 is an example of graph of functions that associate variables related to the vehicle of Figure 1,
- Figure 3 is a line chart showing examples of desired time trends for one of the variables of Figure 2, and
- Figure 4 is an exemplary line chart showing the engine speed during the starting of the vehicle of Figure 1 as a function of the load acting on the same vehicle.

### DETAILED DESCRIPTION OF THE INVENTION

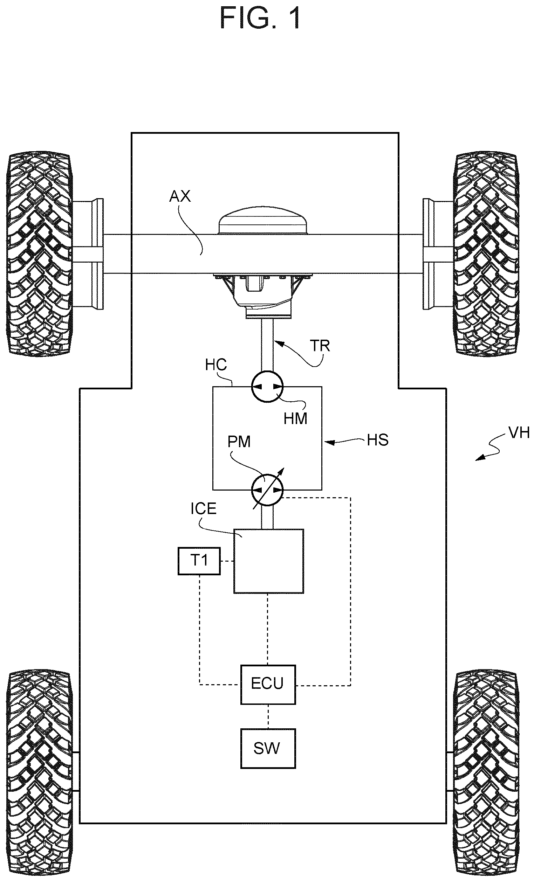

In Figure 1, reference symbol VH indicates a vehicle, in particular a work vehicle, specifically a wheel loader.

The vehicle VH comprises an engine ICE, an axle AX, and a hydrostatic transmission HS connecting the axle AX to the engine ICE.

The vehicle VH further comprises a control unit ECU and a speed control device (not shown), such as an accelerator pedal, lever, button, or the like, which is coupled to the control unit ECU and is operable by a driver, in particular manually, to control the engine speed via the control unit ECU.

The transmission HS comprises a hydraulic circuit HC comprising, in turn, a hydraulic pump PM coupled to the engine ICE, such that the latter can drive the pump PM, and a hydraulic motor HM configured to receive a flow of liquid processed by the pump PM and to convert the hydraulic energy of the received flow into mechanical work.

The hydraulic motor HM is coupled to the axle AX and configured to drive the axle AX itself. In particular, the vehicle VH comprises a transmission TR configured to couple the hydraulic motor HM to the axle AX

The pump PM is a variable displacement pump. The displacement of the pump PM sets a "hydraulic aggressiveness" of the transmission HS, namely the promptness or responsiveness of the hydraulic motor HM. A greater pump displacement corresponds to a higher responsiveness or to a greater aggressiveness.

The vehicle VH comprises an apparatus for controlling the displacement of the pump PM.

The apparatus comprises the control unit ECU, which is coupled to the pump PM. Moreover, preferably, the apparatus comprises a switching device SW coupled to the control unit ECU.

The switching device SW is operable by the driver to be set into a plurality of configurations, including a first and a second configuration. The control unit ECU is configured to determine if the switching device SW is set into the first configuration, the second configuration, or any other configuration. In other words, the control unit ECU is configured to extract information from the switching device SW relative to the set configuration between the available configurations, and to determine the set configuration from the extracted information.

For example, the switching device SW may be a switch having a plurality of positions, including a first and a second position; the switch is configured to generate a signal indicative of its actual position between the possible positions. The control unit ECU is configured to extract the actual position from the generated signal, thereby determining if the switching device is set into the first configuration, the second configuration, or any other configuration.

The first configuration of the switching device SW corresponds to a forward motion of the vehicle VH ("Forward" configuration).

In other words, when the control unit ECU determines that the switching device SW is set into the first configuration, the control unit ECU is configured to control the transmission HS (more precisely the pump displacement), such that the vehicle moves forward. Actually, with greater detail, the control unit ECU commands the pump displacement with a "positive sign" or according to a positive direction. In this manner, the vehicle VH is allowed to move forward.

The second configuration of the switching device SW corresponds to a rearward motion of the vehicle VH ("Reverse" configuration).

In other words, when the control unit ECU determines that the switching device SW is set into the second configuration, the control unit ECU is configured to control the transmission HS (more precisely the pump displacement), such that the vehicle moves rearward. Actually, with greater detail, the control unit ECU commands the pump displacement with a "negative sign" or according to a negative direction. In this manner, the vehicle VH is allowed to move rearward.

For the sake of clarity, the positive and the negative sign refer to opposite circulation directions (positive and negative) of the flow through the hydraulic circuit HC.

More in general, the control unit ECU is configured to determine if the vehicle VH moves forward or rearward. For example, alternatively or additionally to the switching device SW, the control unit ECU may be coupled to a sensor or a transducer (not shown) of the vehicle VH configured to detect a quantity indicative of the forward or rearward motion of the vehicle VH, e.g. the speed or the acceleration of the vehicle. In this manner, the control unit ECU may determine if the vehicle VH is moving forward or rearward by extracting information form a signal generated by the sensor or transducer and associated to the detected quantity.

When the vehicle VH moves forward, the control unit ECU is configured to control the pump displacement according to a first control law.

When the vehicle VH moves rearward, the control unit ECU is configured to control the pump displacement according to a second control law.

The control laws are stored in the control unit ECU.

Hence the control unit ECU is configured to apply the first and the second control law respectively when determines that the switching device SW is set into the first configuration and into the second configuration.

The first and the second control law are set in advance.

The vehicle VH may be subject to different load conditions while moving forward and rearward, respectively. This holds, in particular, due to a different dynamic behavior of mechanical components of the vehicle VH, such as the pump PM, the transmission TR, the hydraulic motor HM, tyres and other mechanical members, for example connecting the engine ICE to the pump PM (e.g. gears). The different dynamic behavior is also the result of the hysteresis of the mechanical components, including for example the typical hysteresis of the materials thereof. Moreover, also the layout of the circuit HC influences the load conditions because of different friction losses when the circulation direction of the liquid is inverted.

For example, the load on the vehicle VH decreases when changing the motion from the forward motion to the rearward motion: if the pump displacement were still controlled according to the first control law, the engine speed of the starting of the vehicle VH would result lower due to the lower load during the rearward motion and the corresponding lower pressure in the circuit HC.

For this reason, at the same engine speed, the second control law sets lower values of the pump displacement with respect to the first control law.

However, the above situation may be different for other vehicles; indeed, it is also possible that a different vehicle is configured such that the load increases, instead of decreasing. In this case, the control laws shall be set accordingly, namely such that the second control law set higher values of the pump displacement with respect to the first control law.

According to the invention, the first and the second control law are differently set.

Substantially, the control laws are set such that the behavior, in particular the kinematic behavior, of the vehicle VH is the same during the starting thereof, both in forward and in rearward motion.

For the sake of clarity, the starting of the vehicle VH may be defined as a period or an operating condition in which the speed of the vehicle VH grows from zero to a speed different from zero.

The first and the second control law are differently set such that an engine speed is the same for any value of a load parameter indicative of the load acting on the vehicle VH, both when the vehicle VH moves forward and rearward.

In particular, the engine speed is the same at the starting of the vehicle VH.

In other words, when the vehicle VH is stationary and the driver operates the speed control device, the vehicle VH starts to move with the engine speed being a given function of the load conditions, i.e. of the load parameter, regardless of the fact that the vehicle VH is actually moving forward or rearward.

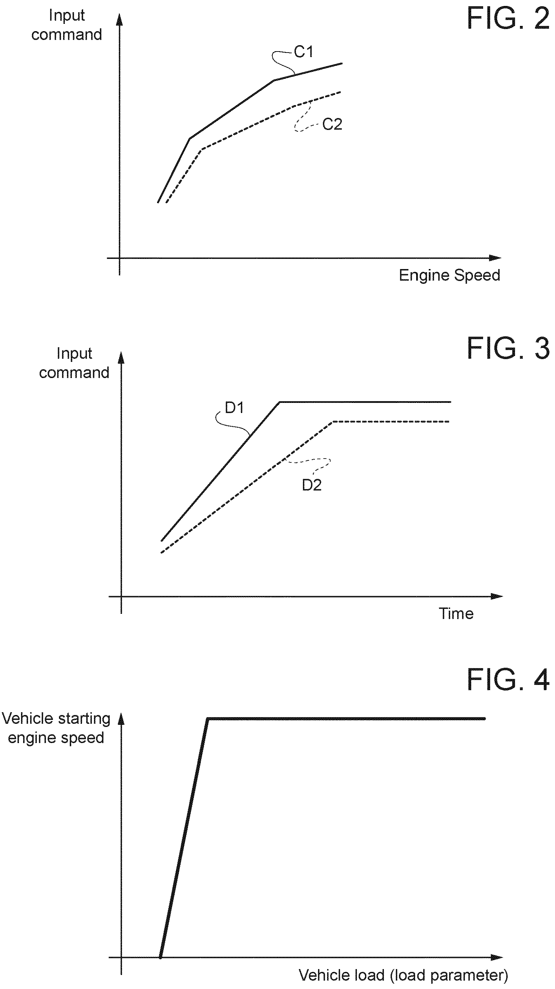

Figure 4 is an exemplary graph of a function associating the engine speed of the starting of the vehicle VH to the load parameter, e.g. a torque on the axle AX. The function is valid for both the forward and the rearward motion of the vehicle VH, thanks to the differently set first and second control law.

The engine speed as a function of the load acting on the vehicle VH is thus invariant with respect to the fact that the vehicle VH is moving forward or rearward, i.e. to the motion direction of the vehicle VH.

To achieve that, for example, the Applicant tuned the first and the second control law experimentally. However, the same can be obtained through mathematical models imposing the constraint that the engine speed of the starting of the vehicle VH variates with the load conditions or load parameter in the same way during forward and rearward motion of the vehicle VH. In any case, the application of mathematical models or the performance of experimental tuning to set the control laws can be positively verified in an easy manner during normal use of the vehicle.

Indeed, for instance, the vehicle VH comprises a transducer T1 coupled to the engine ICE and to the control unit ECU. Transducer T1 is configured to detect a quantity indicative of the engine speed and to generate a signal associated to the detected quantity. Control unit ECU is configured to extract information from the generated signal regarding the detected quantity.

Preferably, the first and the second control law involve the control of the pump displacement based respectively on a first and a second reference variable set in advance as respective different functions of the quantity detectable by the transducer T1, namely as different functions of the engine speed, in particular.

Control unit ECU is configured to control the pump displacement based on the first and the second reference variable as a function of the quantity detected by the transducer T1 respectively when the vehicle VH moves forward and rearward.

The set values of the reference variables correspond to desired values for a variable to be controlled, i.e. a control variable directly correlated with the pump displacement. For example, each of the reference variables and/or the control variable may be an electric variable, such as current or tension, as well as pneumatic variables such as pressure. In any case, a set value of the relevant reference variable as a function of a detected value of the quantity (engine speed, for example) with the vehicle VH moving forward or rearward correspond to the desired value of the control variable, namely a desired input command of an actuating device of the pump PM. The actuating device is configured to adjust the pump displacement in response to the actual input command. Control unit ECU is configured to emit the actual input command based on the desired one, i.e. based on the set value of the relevant reference variable.

Control unit ECU may emit the actual input command according to an open loop control strategy or a closed loop control strategy, based on the set value of the relevant reference variable.

In practice, control unit ECU extracts information on a current value of the quantity detected by transducer T1. Moreover, control unit ECU determines if the vehicle VH is moving forward or rearward, for example extracting information from the switching device SW. In the first case (forward movement), control unit ECU considers the first reference variable; else, it considers the second reference variable. The relevant reference variable is a function of the detected quantity; hence, the current value corresponds to a set value of the same reference variable according to such a function. Thus, control unit ECU emits the input command in view of the set value or set-point, for example following a closed loop or open loop control strategy. Open loop and closed loop control strategies are well known in the art; therefore, no detailed explanation is herein required for those strategies.

The reference variables, i.e. the functions of the quantity detectable by the transducer T1, in particular, are representable by respective curves, as shown in the example in Figure 2.

Figure 2 shows a first curve C1 for the first reference variable and a second curve C2 for the second reference variable. The abscissa represents the quantity, whereas the ordinate represents the reference variables or the input command. The first curve C1 is completely above the second curve C2. Therefore, the set first reference variable is greater than the second reference variable for any value of the quantity.

More in detail, both curves C1, C2 comprise a plurality of rectilinear segments. Moreover, curves C1, C2 are strictly increasing with the quantity. Furthermore, curves C1, C2 are concave. In other words, the derivative of the reference variables with respect to the quantity is decreasing with the quantity (meaning not increasing).

Preferably, the first and the second control law are not only set for controlling the pump displacement, but also the rate thereof, i.e. the time derivative of the pump displacement.

More precisely, considering two different time instants, two different values of the engine speed may be possible. Hence, the input command for controlling the pump displacement would take two different values. Control unit ECU controls the time variation of the input command between the latter different values according to the first and the second control law, respectively when the vehicle VH moves forward and rearward.

In particular, the time variations and thus the time derivatives of the reference variables are set in advance. Therefore, control unit ECU stores a set first time derivative of the first reference variable and a set second time derivative of the second reference variable. The first and the second time derivative are distinct to one another.

Furthermore, control unit ECU is configured to control the pump displacement based on the set first time derivative when the vehicle VH moves forward and on the set second time derivative when the vehicle moves rearward.

For example, control unit ECU may emit the input command according to a control strategy involving two nested closed loops, in particular an outer closed loop where the relevant set reference variable is compared to a corresponding feedback (e.g. obtained through a sensor or transducer coupled to the control unit ECU) and an inner closed loop where the relevant set time derivative of the reference variable is compared to a further corresponding feedback (e.g. obtained through a sensor or transducer coupled to the control unit ECU). A PID control strategy may be applied to each closed loop; the input command is the output of the inner closed loop.

Generally, the first time derivative is greater than the second time derivative for a same variation of the first and the second reference variable. In other words, the first control law involves a greater hydraulic aggressiveness than the second control law, in particular due to the set time derivatives, but this can hold also only due to the set reference variables.

Preferably, the first and the second time derivative are constant. More preferably, the first constant time derivative is greater than the second constant time derivative.

Figure 3 shows exemplarily a first and a second trend D1, D2 of the input command over time, respectively when the vehicle VH moves forward and rearward.

Both trends D1, D2 have a ramp portion with constant slope representing the set first and second time derivative of the reference variable.

In addition, optionally, the first and the second control law involve or comprise the setting of a first and a second maximum displacement for the pump PM. The maximum displacements are different to one another and stored into the control unit ECU. The first and the second maximum displacement are respectively set for when the vehicle VH moves forward and rearward.

Control unit ECU is configured to limit the displacement of the pump to the first and the second maximum displacement respectively when the vehicle VH moves forward and rearward. Hence, the maximum speed of the vehicle VH is different during forward and rearward motion, respectively.

In the example of Figure 2, the maximum value of the input command for the curve C1 is higher than the maximum value of the input command for the curve C2, that means that the maximum pump displacement when the vehicle VH moves forward is higher than the maximum pump displacement when the vehicle VH moves rearward.

Accordingly, in the example of Figure 3, both trends D1, D2 have at an end of the ramp a constant maximum portion representing the set first and second maximum displacement, in particular with the first one higher than the second one.

During the operation of the vehicle VH, a method according to the invention is carried out for controlling the displacement of the pump PM.

The method comprises the steps of determining if the vehicle is moving forward or rearward, setting a first control law for controlling said displacement when the vehicle moves forward, and setting a second control law for controlling said displacement when the vehicle moves rearward. The first and the second control law are differently set, such that a speed of the engine ICE variates as a function of a load parameter in the same manner when the vehicle VH moves forward and rearward, with the load parameter being indicative of a load acting on the vehicle VH.

In view of the foregoing, the advantages of the vehicle VH and of the method according to the invention are apparent.

Indeed, the engine speed when the vehicle VH starts to move is uniformed, such that the comfort of the operator is increased. Moreover, also the performance and the efficiency of the vehicle VH are increased.

Different aggressiveness strategies and maximum speeds of the vehicle VH for forward and rearward motion can be implemented in this manner to increase the comfort of the driver, as well as the performance and the efficiency of the vehicle VH.

It is clear that modifications can be made to the described vehicle VH and to the described method, which do not extend beyond the scope of protection defined by the claims.

## Claims

1. A method for controlling the displacement of a pump (PM) for an hydrostatic transmission mounted on a vehicle (VH) and driven by an engine (ICE) of the vehicle (VH), the method comprising the steps of
- determining if the vehicle (VH) is moving forward or rearward,
- setting a first control law for controlling said displacement when the vehicle (VH) moves forward,
- setting a second control law for controlling said displacement when the vehicle (VH) moves rearward,
wherein the first and the second control law are differently set such that a speed of the engine (ICE) variates as a function of a load parameter in the same manner when the vehicle (VH) moves forward and rearward; wherein the load parameter is indicative of a load acting on the vehicle (VH);
the method further comprising the step of detecting a quantity indicative of a speed of the engine (ICE), wherein the steps of setting the first and the second control law respectively comprise setting a first and a second reference variable for controlling said displacement as respective different functions of the detected quantity, wherein the displacement is controlled based on the set first and second reference variable as a function of the detected quantity respectively when the vehicle (VH) moves forward and rearward;
the method is **characterized in that** the first reference variable is greater than the second reference variable for any value of the quantity.

2. The method of claim 1, wherein said different functions are respectively representable by a first curve and a second curve (C1, C2).

3. The method of any of claims 1 or 2, wherein the steps of setting the first and the second control law respectively comprise also setting a first time derivative of the first reference variable and a second time derivative of the second reference variable, wherein the displacement is controlled based on the set first time derivative when the vehicle (VH) moves forward and on the set second time derivative when the vehicle moves rearward.

4. The method of claim 3, wherein the first and the second time derivative are constant, the first time derivative being greater than the second time derivative.

5. The method of any of claims 1 to 4, wherein the steps of setting the first and the second control law respectively comprise also setting a first maximum displacement for the pump (PM) when the vehicle (VH) moves forward and a second maximum displacement for the pump (PM) when the vehicle (VH) moves rearward, the first maximum displacement being greater than the second maximum displacement.

6. A vehicle (VH) comprising
- an engine (ICE),
- a pump (PM) coupled to the engine (ICE) to be driven by the engine (ICE),
- a control unit (ECU) configured to determine if the vehicle (VH) is moving forward or rearward and storing a first and a second control law for controlling a displacement of the pump (PM), respectively when the vehicle (VH) moves forward and rearward,
wherein the first and the second control law are differently set such that a speed of the engine (ICE) variates as a function of a load parameter in the same manner when the vehicle (VH) moves forward and rearward; wherein the load parameter is indicative of a load acting on the vehicle (VH); said vehicle further comprising a transducer (T1) coupled to the control unit (ECU) and configured to detect a quantity indicative of a speed of the engine (ICE) and to generate a signal associated to the detected quantity,
the first and the second control law being respectively based on a set first and a set second reference variable stored in the control unit (ECU) as respective different functions of the detected quantity,
wherein the control unit (ECU) is configured to extract information from the signal regarding the detected quantity and to control the displacement based on the first and the second reference variable as a function of the detected quantity respectively when the vehicle (VH) moves forward and rearward,
the vehicle is **characterized in that** the first reference variable is greater than the second reference variable for any value of the quantity.

7. The vehicle of claim 6, wherein the first and the second control law are furthermore respectively based on a set first time derivative of the first reference variable and a second set time derivative of the second reference variable, the set first and second time derivative being stored in the control unit (ECU), wherein the control unit (ECU) is configured to control the displacement based on the set first time derivative when the vehicle (VH) moves forward and on the set second time derivative when the vehicle (VH) moves rearward.

8. The vehicle of claim 6 or 7, wherein the first and the second control law are furthermore respectively based on a set first maximum displacement for the pump (PM) and a set second maximum displacement for the pump (PM) stored in the control unit (ECU), the control unit (ECU) being configured to limit the displacement of the pump (PM) to the first and second maximum displacement, respectively when the vehicle (VH) moves forward and rearward, the first maximum displacement being greater than the second maximum displacement.

## Patentansprüche

1. Verfahren zur Steuerung des Hubvolumens einer Pumpe (PM) für ein hydrostatisches Getriebe, das an einem Fahrzeug (VH) montiert und von einem Motor (ICE) des Fahrzeugs (VH) angetrieben ist, wobei das Verfahren folgende Schritte aufweist:
Ermitteln, ob sich das Fahrzeug (VH) vorwärts oder rückwärts bewegt,
Festlegen einer ersten Regelstrategie zur Steuerung des Hubvolumens, wenn sich das Fahrzeug (VH) vorwärts bewegt,
Festlegen einer zweiten Regelstrategie zur Steuerung des Hubvolumens, wenn sich das Fahrzeug (VH) rückwärts bewegt,
wobei die erste und die zweite Regelstrategie unterschiedlich festgelegt sind, sodass sich eine Drehzahl des Motors (ICE) in Abhängigkeit eines Lastparameters in gleicher Weise ändert, wenn sich das Fahrzeug (VH) vorwärts und rückwärts bewegt, wobei der Lastparameter eine auf das Fahrzeug (VH) wirkende Last anzeigt;
wobei das Verfahren des Weiteren den Schritt des Erfassen einer Größe umfasst, die auf eine Drehzahl des Motors (ICE) hinweist, wobei die Schritte des Festlegens der ersten und der zweiten Regelstrategie jeweils das Festlegen einer ersten und einer zweiten Referenzgröße zur Steuerung des Hubvolumens als jeweils unterschiedliche Funktionen der erfassten Größe umfassen, wobei das Hubvolumen in Abhängigkeit der jeweils festgelegten ersten und zweiten Referenzgröße als Funktion der erfassten Größe gesteuert wird, wenn sich das Fahrzeug (VH) jeweils vorwärts bzw. rückwärts bewegt;
wobei das Verfahren **dadurch gekennzeichnet ist, dass** die erste Referenzgröße für jeden Wert der Größe größer ist als die zweite Referenzgröße.

2. Verfahren nach Anspruch 1, wobei die unterschiedlichen Funktionen jeweils durch eine erste Kurve und eine zweite Kurve (C1, C2) darstellbar sind.

3. Verfahren nach einem der Ansprüche 1 oder 2, wobei die Schritte des Festlegens der ersten bzw. der zweiten Regelstrategie auch das Festlegen einer ersten zeitlichen Ableitung der ersten Referenzgröße und einer zweiten zeitlichen Ableitung der zweiten Referenzgröße umfassen, wobei das Hubvolumen basierend auf der festgelegten ersten zeitlichen Ableitung, wenn sich das Fahrzeug (VH) vorwärts bewegt, und basierend auf der festgelegten zweiten zeitlichen Ableitung gesteuert wird, wenn sich das Fahrzeug rückwärts bewegt.

4. Verfahren nach Anspruch 3, wobei die erste und die zweite zeitliche Ableitung konstant sind, wobei die erste zeitliche Ableitung größer ist als die zweite zeitliche Ableitung.

5. Verfahren nach einem der Ansprüche 1 bis 4, wobei die Schritte des Festlegens der ersten und der zweiten Regelstrategie jeweils auch das Festlegen eines ersten maximalen Hubvolumens für die Pumpe (PM), wenn sich das Fahrzeug (VH) vorwärts bewegt, und eines zweiten maximalen Hubvolumens für die Pumpe (PM), wenn sich das Fahrzeug (VH) rückwärts bewegt, umfassen, wobei das erste maximale Hubvolumen größer ist als das zweite maximale Hubvolumen.

6. Fahrzeug (VH) mit:
einem Motor (ICE),
einer Pumpe (PM), die mit dem Motor (ICE) gekoppelt ist, sodass sie vom Motor (ICE) angetrieben wird,
einer Steuereinheit (ECU), die dazu eingerichtet ist, zu bestimmen, ob sich das Fahrzeug (VH) vorwärts oder rückwärts bewegt, und die eine erste und eine zweite Regelstrategie zur Steuerung eines Hubvolumens der Pumpe (PM) speichert, wenn sich das Fahrzeug (VH) vorwärts bzw. rückwärts bewegt,
wobei die erste und die zweite Regelstrategie unterschiedlich festgelegt sind, sodass sich eine Drehzahl des Motors (ICE) in Abhängigkeit eines Lastparameters in gleicher Weise ändert, wenn sich das Fahrzeug (VH) vorwärts und rückwärts bewegt, wobei der Lastparameter eine auf das Fahrzeug (VH) wirkende Last anzeigt;
wobei das Fahrzeug des Weiteren einen Wandler (T1) aufweist, der mit der Steuereinheit (ECU) gekoppelt und dazu eingerichtet ist, eine Größe zu erfassen, die auf eine Drehzahl des Motors (ICE) hinweist, und ein mit der erfassten Größe verknüpftes Signal zu erzeugen,
wobei die erste und die zweite Regelstrategie jeweils auf einer in der Steuereinheit (ECU) gespeicherten ersten und zweiten Referenzgröße basieren, die jeweils unterschiedliche Funktionen der erfassten Größe darstellen,
wobei die Steuereinheit (ECU) dazu eingerichtet ist, Informationen über die erfasste Größe aus dem Signal zu extrahieren und das Hubvolumen basierend auf der ersten bzw. zweiten Referenzgröße als Funktion der erfassten Größe jeweils bei Vorwärts- bzw. Rückwärtsfahrt zu steuern,
wobei das Fahrzeug **dadurch gekennzeichnet ist, dass**
die erste Referenzgröße für jeden Wert der Größe größer ist als die zweite Referenzgröße.

7. Fahrzeug nach Anspruch 6, wobei die erste und die zweite Regelstrategie des Weiteren jeweils auf einer in der Steuereinheit (ECU) gespeicherten ersten zeitlichen Ableitung der ersten Referenzgröße und einer zweiten zeitlichen Ableitung der zweiten Referenzgröße basieren, wobei die Steuereinheit (ECU) dazu eingerichtet ist, das Hubvolumen basierend auf der ersten zeitlichen Ableitung bei Vorwärtsfahrt und auf der zweiten zeitlichen Ableitung bei Rückwärtsfahrt zu steuern.

8. Fahrzeug nach Anspruch 6 oder 7, wobei die erste und die zweite Regelstrategie des Weiteren jeweils auf einem in der Steuereinheit (ECU) gespeicherten ersten maximalen Hubvolumen für die Pumpe (PM) und einem zweiten maximalen Hubvolumen für die Pumpe (PM) basieren, wobei die Steuereinheit (ECU) dazu eingerichtet ist, das Hubvolumen der Pumpe (PM) jeweils bei Vorwärts- bzw. Rückwärtsfahrt auf das erste bzw. zweite maximale Hubvolumen zu begrenzen, wobei das erste maximale Hubvolumen größer ist als das zweite maximale Hubvolumen.

## Revendications

1. Un procédé de commande de la cylindrée d'une pompe (PM) pour une transmission hydrostatique montée sur un véhicule (VH) et entraînée par un moteur (ICE) du véhicule (VH), le procédé comprenant les étapes consistant à
déterminer si le véhicule (VH) avance ou recule,
définir une première loi de commande pour commander ladite cylindrée lorsque le véhicule (VH) avance,
définir une seconde loi de commande pour commander ladite cylindrée lorsque le véhicule (VH) recule,
dans laquelle la première et la seconde loi de commande sont définies différemment de sorte qu'un régime du moteur (ICE) varie en fonction d'un paramètre de charge de la même manière lorsque le véhicule (VH) avance et recule ; dans laquelle le paramètre de charge indique une charge agissant sur le véhicule (VH) ;
le procédé comprend en outre l'étape de détection d'une quantité indicative d'un régime du moteur (ICE), dans lequel les étapes de réglage de la première et de la seconde loi de commande comprennent respectivement le réglage d'une première et d'une seconde variable de référence pour commander ladite cylindrée en tant que fonctions respectives différentes de la quantité détectée, dans lequel la cylindrée est commandée selon la première et la seconde variable de référence définies en fonction de la quantité détectée respectivement lorsque le véhicule (VH) avance et recule ;
le procédé est **caractérisé en ce que** la première variable de référence est supérieure à la seconde variable de référence pour n'importe quelle valeur de la quantité.

2. Le procédé selon la revendication 1, dans lequel lesdites fonctions différentes sont respectivement représentables par une première courbe et une seconde courbe (C1, C2).

3. Le procédé selon l'une quelconque des revendications 1 ou 2, dans lequel les étapes de réglage de la première et de la seconde loi de commande comprennent également respectivement le réglage d'une première dérivée temporelle de la première variable de référence et d'une seconde dérivée temporelle de la seconde variable de référence, dans lequel la cylindrée est commandée en fonction de la première dérivée temporelle définie lorsque le véhicule (VH) avance et de la seconde dérivée temporelle définie lorsque le véhicule recule.

4. Le procédé selon la revendication 3, dans lequel la première et la seconde dérivée temporelle sont constantes, la première dérivée temporelle étant supérieure à la seconde dérivée temporelle.

5. Le procédé selon l'une quelconque des revendications 1 à 4, dans lequel les étapes de réglage de la première et de la seconde loi de commande comprennent également respectivement le réglage d'une première cylindrée maximale de la pompe (PM) lorsque le véhicule (VH) avance et d'une seconde cylindrée maximale de la pompe (PM) lorsque le véhicule (VH) recule, la première cylindrée maximale étant supérieure à la seconde cylindrée maximale.

6. Un véhicule (VH) comprenant
un moteur (ICE)
une pompe (PM) couplée au moteur (ICE) pour être entraînée par le moteur (ICE),
une unité de commande (ECU) configurée pour déterminer si le véhicule (VH) avance ou recule et stocker une première et une seconde loi de commande pour commander une cylindrée de la pompe (PM), respectivement lorsque le véhicule (VH) avance et recule,
dans lequel la première et la seconde loi de commande sont définies différemment de sorte qu'un régime du moteur (ICE) varie en fonction d'un paramètre de charge de la même manière lorsque le véhicule (VH) avance et recule ; dans lequel le paramètre de charge indique une charge agissant sur le véhicule (VH) ;
ledit véhicule comprend en outre un transducteur (T1) couplé à l'unité de commande (ECU) et configuré pour détecter une quantité indicative d'un régime du moteur (ICE) et générer un signal associé à la quantité détectée,
la première et la seconde loi de commande reposent respectivement sur une première et une seconde variable de référence définies stockées dans l'unité de commande (ECU) en tant que fonctions différentes de la quantité détectée,
dans lequel l'unité de commande (ECU) est configurée pour extraire des informations du signal concernant la quantité détectée et pour commander la cylindrée selon la première et la seconde variable de référence en fonction de la quantité détectée respectivement lorsque le véhicule (VH) avance et recule,
le véhicule est **caractérisé en ce que** la première variable de référence est supérieure à la seconde variable de référence quelle que soit la valeur de la quantité.

7. Le véhicule selon la revendication 6, dans lequel la première et la seconde loi de commande reposent en outre respectivement sur une première dérivée temporelle de la première variable de référence et sur une seconde dérivée temporelle de la seconde variable de référence, la première et la seconde dérivée temporelle étant stockées dans l'unité de commande (ECU), dans lequel l'unité de commande (ECU) est configurée pour commander la cylindrée en fonction de la première dérivée temporelle définie lorsque le véhicule (VH) avance et de la seconde dérivée temporelle définie lorsque le véhicule (VH) recule.

8. Le véhicule selon la revendication 6 ou la revendication 7, dans lequel la première et la seconde loi de commande reposent en outre respectivement sur une première cylindrée maximale définie de la pompe (PM) et une seconde cylindrée maximale définie de la pompe (PM) stockées dans l'unité de commande (ECU), l'unité de commande (ECU) étant configurée pour limiter la cylindrée de la pompe (PM) à la première et à la seconde cylindrée maximale, respectivement lorsque le véhicule (VH) avance et recule, la première cylindrée maximale étant supérieure à la seconde cylindrée maximale.
